# EUROPEAN PATENT SPECIFICATION

(11) **EP 0 429 105 B1**
(45) Date of publication and mention of the grant of the patent: **31.07.1996**
(21) Application number: 90202646.7
(22) Date of filing: 04.10.1990
(51) Int. Cl.: C08G 67/02

(54) **Preparation of polymers and polymer mixtures of carbon monoxide with two or more olefinically unsaturated compounds, linear block copolymers and polymer mixtures**
Verfahren zur Herstellung von Polymeren und Polymermischungen aus Kohlenmonoxyd und zweier oder mehrerer olefinischen ungesättigten Verbindungen, lineare Blockcopolymere und Polymermischungen
Préparation de polymères et de mélanges de polymères de l'oxyde de carbone et de deux ou de plusieurs composés oléfiniques non saturés, copolymères séquencés linéaires et mélanges de polymères

(30) Priority: 11.10.1989 NL 8902518
(43) Date of publication of application: 29.05.1991
(73) Proprietor: SHELL INTERNATIONALE RESEARCH MAATSCHAPPIJ B.V., NL-2596 HR Den Haag (NL)
(72) Inventor: Drent, Eit, NL-1031 CM Amsterdam (NL); Breed, Anthonius Johannes Maria, NL-1031 CM Amsterdam (NL)

(56) References cited:
- EP-A- 0 213 671
- EP-A- 0 229 408
- GB-A- 2 214 917
- D1 = EP-A-0351023
- D2 = EP-A-0420330
- D5 = EP-A-0220765
- D6 = EP-A-0251373
- D7 = EP-A-0235865
- D9 = EP-A-0315266

## Description

The invention relates to a process for the preparation of polymers of carbon monoxide with one or more olefinically unsaturated compounds, to certain linear block polymers based on carbon monoxide and olefinically unsaturated compounds, and to certain polymer mixtures thereof.

It is known from EP-A-235865 that high molecular weight linear polymers of carbon monoxide with one or more α-olefins with a maximum of four carbon atoms per molecule (for the sake of brevity referred to as monomers A), in which polymers on the one hand the units originating from carbon monoxide and on the other hand the units originating from the monomers A are present in a substantially alternating order, can be prepared by contacting the monomers at elevated temperature and pressure with a catalyst containing a Group VIII metal and a phosphorus bidentate ligand.

In the past, the applicant carried out an investigation into the application of the above-mentioned catalysts in the preparation of linear alternating polymers of carbon monoxide with certain cyclohexane derivatives. Some of these results have been disclosed in non-prepublished EP-A-0 351 023. These derivatives contain a cyclohexane ring of which the carbon atoms 1 and 4 are joined to each other by one oxygen or carbon atom, the carbon atoms 5 and 6 are joined to each other by an olefinic double bond and the carbon atoms 2 and 3 may carry a substituent. Depending on the substituents present at the carbon atoms 2 and 3, the compounds involved in the investigation can be divided into two classes, viz. compounds of which at least one of the carbon atoms 2 and 3 carries a carbonyloxy group which forms part of a carboxylic acid anhydride group or a dicarboxylic acid anhydride group (for the sake of brevity referred to as monomers B) and compounds in which carbon atoms 2 and 3 only carry hydrogen atoms and/or hydrocarbyl groups (for the sake of brevity referred to as monomers D). The polymers prepared from carbon monoxide and one of the monomers A, B and D, as described above, will hereinafter be referred to as the CO/A, CO/B or CO/D (co)polymers, respectively. The conclusions drawn from this investigation were as follows:
1) At reaction temperatures of below 100°C, customary for this type of polymerization, and starting with monomer mixtures which besides carbon monoxide also contain either a monomer B or a monomer D, it is not possible to prepare CO/B or CO/D copolymers.
2) CO/B copolymers can, however, be prepared if, in addition to carbon monoxide and a monomer B, the monomer mixture also contains a monomer A. Despite the presence of three different monomers, no terpolymers are formed.
3) Contrary to what is stated under 2), no CO/D copolymers are formed if a monomer A is included in a monomer mixture containing a monomer D in addition to carbon monoxide.

According to EP-A-229408 linear alternating copolymers of carbon monoxide and norbornene or dicyclopentadiene can be prepared by using a catalyst based upon a Group VIII metal, a nitrogen bidentate ligand, such as 2,2'-bipyridine, and an oxidant.

Continued research has revealed that by using the catalysts containing a phosphorus bidentate ligand it is also possible to prepare linear alternating polymers of carbon monoxide with one or more monomers D, provided that polymerization temperatures of above 100°C are employed. It has now surprisingly been found that if, under these conditions, a starting monomer mixture was used that, in addition to carbon monoxide and one or more monomers D, also contained one or more monomers A, a much higher polymerization rate was obtained yielding a linear alternating CO/D copolymer. It is also surprising that, depending on the reaction time and the monomer ratio chosen for the mixture to be polymerized, in addition to linear alternating CO/D copolymers, linear block polymers could also be formed consisting of an alternating CO/D polymer block and an alternating CO/A block, as well as linear alternating CO/A polymers.

The above-mentioned CO/D-CO/A block polymers are novel. Mixtures of these block polymers with linear alternating CO/D polymers and optionally with linear alternating CO/A polymers are also novel.

As already pointed out, the aforesaid polymers and polymer mixtures are prepared with the aid of a catalyst containing a phosphorus bidentate ligand. In this patent application, phosphorus bidentate ligands are understood to mean compounds of the general formula R¹R²P-R-PR³R⁴, in which R¹ to R⁴ are identical or different optionally polarly substituted hydrocarbyl groups and R is a divalent bridging group containing at least two carbon atoms in the bridge.

The present patent application therefore relates to a process for the preparation of polymers and polymer mixtures of carbon monoxide with one or more olefinically unsaturated compounds, wherein a mixture of carbon monoxide with one or more compounds (monomers D) containing in their molecules a cyclohexane ring of which the carbon atoms 1 and 4 are joined to each other by one oxygen or carbon atom, the carbon atoms 5 and 6 are joined to each other by an olefinic double bond and the carbon atoms 2 and 3 carry one or more hydrogen atoms and/or one or more hydrocarbyl groups and one or more α-olefins (monomers A) with a maximum of four carbon atoms per molecule, is contacted at a temperature of above 100°C and at elevated pressure with a catalyst containing a Group VIII metal and a phosphorus bidentate ligand of the general formula R¹R²P-R-PR³R⁴, in which R¹ to R⁴ are identical or different optionally polarly substituted hydrocarbyl groups and R is a divalent bridging group containing at least two carbon atoms in the bridge.

The patent application also relates to the CO/D-CO/A block polymers mentioned hereinbefore as novel polymers and to mixtures of these block polymers with linear alternating CO/A polymers as novel polymer mixtures.

The monomers D used in the preparation of the polymers and the polymer mixtures according to the invention contain a cyclohexane ring of which the carbon atoms 1 and 4 are joined to each other by one oxygen or carbon atom and the carbon atoms 5 and 6 are joined to each other by an olefinic double bond. If the carbon atoms 1 and 4 in the monomers D are joined to each other by an oxygen atom, they can be described as 1,4-endoxo-5-cyclohexene and derivatives thereof. If the carbon atoms 1 and 4 in the monomers D are joined to each other by a carbon atom carrying only two hydrogen atoms, they can be described as 5-norbornene and derivatives thereof. If desired, the carbon atom joining the carbon atoms 1 and 4 of the cyclohexane ring may carry one or two hydrocarbyl substituents. If the joining carbon atom carries two methyl groups, the monomers D can be described as 5-bornene and derivatives thereof. The carbon atoms 2 and 3 of the cyclohexane ring in the monomers D carry one or more hydrogen atoms and/or one or more hydrocarbyl groups. An example of such a compound is dicyclopentadiene. This compound can be considered as a derivative of 5-norbornene in which both the second and the third carbon atoms of the cyclohexane ring carry a hydrocarbyl substituent and which hydrocarbyl substituents together form a -CH-CH-CH₂-group. Very suitable compounds for use as monomers D in the preparation of the polymers and polymer mixtures according to the invention are 5-norbornene, 5-bornene, 1,4-endoxo-5-cyclohexene and dicyclopentadiene. The use of 5-norbornene and dicyclopentadiene as monomer D is preferred.

As in the polymerization according to the invention, it is intended to raise the polymerization rate and/or to prepare polymer mixtures which in addition to CO/D polymers contain CO/D-CO/A block polymers and CO/A polymers, one or more monomers A should be included in the monomer mixture. The use of ethylene as monomer A is preferred. Preference is further given to a monomer mixture in which in addition to carbon monoxide only one monomer D is present and only one monomer A is present.

As pointed out above, the polymers and polymer mixtures according to the invention are prepared by contacting the monomers at a temperature of above 100°C and at elevated pressure with a catalyst containing a Group VIII metal and a phosphorus bidentate ligand.

In this patent application Group VIII metals are understood to be the noble metals ruthenium, rhodium, palladium, osmium, iridium and platinum, as well as the iron group metals iron, cobalt and nickel.

In the catalysts used in the preparation of the polymers and the polymer mixtures according to the invention the Group VIII metal is preferably selected from palladium, nickel and cobalt. Palladium is particularly preferred as Group VIII metal. The incorporation of the Group VIII metal in the catalysts is preferably in the form of a salt of a carboxylic acid, in particular in the form of an acetate. In addition to a Group VIII metal and a phosphorus bidentate ligand, the catalysts used in the preparation of the polymers and polymer mixtures according to the invention also preferably contain an anion of an acid with a pKa of less than 6, in particular an anion of an acid with a pKa of less than 4 and especially an anion of an acid with a pKa of less than 2. Examples of acids with a pKa of less than 2 are sulphuric acid, perchloric acid, sulphonic acids such as methanesulphonic acid, trifluoromethanesulphonic acid and para-toluenesulphonic acid, and halocarboxylic acids such as trichloroacetic acid, difluoroacetic acid and trifluoroacetic acid. A sulphonic acid such as paratoluenesulphonic acid or a halogenocarboxylic acid such as trifluoroacetic acid is preferred. The incorporation of the anion of an acid with a pKa of less than 6 in the catalyst can take place in the form of an acid and/or in the form of a salt such as a copper salt. The anion is preferably present in the catalysts in a quantity of 1-1000 and in particular 2-100 mol per mol Group VIII metal. As well as by addition as a separate component, the anions of acids with a pKa of less than 6 may also be present in the catalysts by using, for example, palladium trifluoroacetate or palladium para-tosylate as palladium compound.

To enhance the activity of the catalysts, said catalysts may also include a 1,4-quinone. For this purpose, 1,4-benzoquinone and 1,4-naphthoquinone are very suitable. The quantity of 1,4-quinone employed is preferably 1-10,000 and in particular 10-5000 mol per mol Group VIII metal.

In the catalysts used in the preparation of the polymers and polymer mixtures according to the invention, the bidentate ligand is preferably present in a quantity of 0.5-10 and in particular 0.75-5 mol per mol Group VIII metal. Preferred phosphorus bidentate ligands are those in which the groups R¹ to R⁴ are identical aryl groups and in which the bridge group R contains three atoms in the bridge of which at least two are carbon atoms and in particular such compounds in which the groups R¹ to R⁴ are identical phenyl groups containing one or more polar substituents of which at least one is in the ortho position relative to the phosphorus atom to which the phenyl group is attached. The polar substituents are preferably alkoxy groups and in particular methoxy groups. Examples of such bidentate ligands are 1,3-bis[bis(2-methoxyphenyl)phosphino]propane, 1,3-bis[bis(2,4-dimethoxyphenyl)phosphino]propane, and 1,3-bis[bis(2,4,6-trimethoxyphenyl)phosphino]propane.

The use of 1,3-bis[bis(2-methoxyphenyl)phosphino]propane is preferred.

The preparation of polymers and polymer mixtures according to the invention is preferably carried out by contacting the monomers with a solution of the catalyst in a diluent. Examples of suitable diluents are lower alcohols such as methanol. The polymerization can be carried out both batchwise and continuously.

The quantity of catalyst that can be used in the preparation of the polymers may vary within wide limits. Per mol of olefinically unsaturated compound to be polymerized, a quantity of catalyst is employed which preferably contains 10⁻⁷ - 10⁻³ and in particular 10⁻⁶ -10⁻⁴ mol Group VIII metal.

The preparation of the polymers and polymer mixtures according to the invention is preferably carried out at a temperature of between 100 and 200°C and a pressure of between 5 and 150 bar and in particular at a temperature of between 110 and 150°C and a pressure of between 10 and 100 bar. The molar ratio of the olefinically unsaturated compounds relative to carbon monoxide is preferably 10:1 - 1:10 and in particular 5:1 - 1:5.

The invention will now be illustrated with reference to the following examples.

### Example 1

A carbon monoxide/5-norbornene copolymer was prepared as follows.

A catalyst solution was introduced into a stirred autoclave with a capacity of 250 ml, the solution consisting of:
50 ml methanol,
0.1 mmol palladium acetate,
2 mmol trifluoroacetic acid, and
0.15 mmol 1,3-bis(diphenylphosphino)propane.

After 10 ml 5-norbornene had been introduced into the autoclave, air was removed by evacuation. Ethylene was then introduced under pressure until a pressure of 20 bar was reached and then carbon monoxide until a pressure of 50 bar was reached. Finally, the contents of the autoclave were heated to 110°C. After 5 hours the polymerization was terminated by cooling to room temperature and releasing the pressure.

9 g copolymer was obtained.

### Example 2

A carbon monoxide/5-norbornene copolymer was prepared in virtually the same manner as in example 1, but with the following differences:
a) the reaction temperature was 120°C instead of 110°C, and
b) the reaction time was 3 hours instead of 5 hours.
   10.5 g copolymer was obtained.

### Example 3

A carbon monoxide/5-norbornene copolymer was prepared in virtually the same manner as in example 1, but with the following differences:
a) only carbon monoxide was introduced into the autoclave until a pressure of 30 bar was reached (i.e. no ethylene), and
b) the reaction temperature was 120°C instead of 110°C.
   9.5 g copolymer was obtained.

### Example 4

Example 1 was substantially repeated, but with the difference that the reaction temperature was 120°C instead of 110°C.
22 g polymer material was obtained.

### Example 5

A carbon monoxide/dicyclopentadiene copolymer was prepared in virtually the same manner as the carbon monoxide/5-norbornene copolymer in example 1, but with the following differences:
a) 10 ml dicyclopentadiene was introduced into the autoclave instead of 5-norbornene, and
b) the reaction temperature was 120°C instead of 110°C.
   10 g copolymer was obtained.

### Example 6

A carbon monoxide/dicyclopentadiene copolymer was prepared in virtually the same manner as the carbon monoxide/5-norbornene copolymer in example 1, but with the following differences:
a) 10 ml dicyclopentadiene was introduced into the autoclave instead of 5-norbornene,
b) only carbon monoxide was introduced into the autoclave until a pressure of 30 bar was reached (i.e. no ethylene), and
c) the reaction temperature was 120°C instead of 110°C.
   6.5 g copolymer was obtained.

### Example 7

Example 1 was substantially repeated, but with the following differences:
a) 10 ml dicyclopentadiene was introduced into the autoclave instead of 5-norbornene,
b) the reaction temperature was 120°C instead of 110°C, and
c) the reaction time was 10 hours instead of 5 hours.
   23 g polymer material was obtained.

### Example 8

Example 1 was substantially repeated, but with the following differences:
a) the reaction temperature was 80°C instead of 110°C, and
b) the reaction time was 1 hour instead of 5 hours.
   Only a trace of polymer material was formed.

### Example 9

Example 1 was substantially repeated, but with the following differences:
a) the reaction temperature was 90°C instead of 110°C, and
b) the reaction time was 1 hour instead of 5 hours.

Only a trace of polymer material was formed.

Of examples 1-9, examples 1, 2, 4, 5 and 7 are according to the invention. Examples 3, 6, 8 and 9 fall outside the scope of this invention. They are included for comparative purposes. In examples 1-3, 5 and 6, CO/5-norbornene and CO/dicyclopentadiene copolymers were prepared according to the invention at temperatures of above 100°C. It was established by ¹³C-NMR analysis that these copolymers had a linear structure and that the units originating from the starting monomers occurred in alternating order. In examples 1, 2, 4, 5 and 7-9 the copolymers were prepared from a monomer mixture containing ethylene. The favourable influence of the presence of ethylene on the polymerization rate is clearly seen by comparing the result of example 3 (9.5 g in 5 hours) with that of example 2 (10,5 g in 3 hours) and by comparing the result of example 6 (6.5 g in 5 hours) with that of example 5 (10 g in 5 hours).

In order to analyse the polymer materials prepared according to examples 4 and 7, they were extracted with chloroform. In both cases a chloroform solution and a residue were obtained which were subjected to ¹³C-NMR analysis.

The quantity of residue obtained from the extraction of the polymer material prepared according to example 4 was 9 g and consisted of a linear alternating CO/ethylene copolymer. The chloroform solution contained 13 g of a mixture of a linear alternating CO/5-norbornene copolymer and a block copolymer built up of a linear alternating CO/5-norbornene copolymer block and a linear alternating CO/ethylene copolymer block. In the polymer mixture present in the chloroform solution, the percentage of units originating from ethylene was about 5% calculated on the total number of units originating from ethylene and 5-norbornene.

The quantity of residue obtained from the extraction of the polymer material prepared according to example 7 was 10 g and consisted of a linear alternating CO/ethylene copolymer. The chloroform solution contained 13 g of a mixture of a linear alternating CO/dicyclopentadiene copolymer and a block polymer built up of a linear alternating CO/dicyclopentadiene copolymer block and a linear alternating CO/ethylene copolymer block. In the polymer mixture present in the chloroform solution, the percentage of units originating from ethylene was about 10% calculated on the total number of units originating from ethylene and dicylopentadiene.

Examples 8 and 9 demonstrate that, despite the presence of ethylene in the polymer mixture at temperatures of 90°C and below, hardly any polymer formation takes place.

## Claims

1. Process for the preparation of polymers and polymer mixtures of carbon monoxide with one or more olefinically unsaturated compounds, characterized in that a mixture of carbon monoxide with one or more compounds (monomers D) containing in their molecules a cyclohexane ring of which the carbon atoms 1 and 4 are joined to each other by one oxygen or carbon atom, the carbon atoms 5 and 6 are joined to each other by an olefinic double bond and the carbon atoms 2 and 3 carry one or more hydrogen atoms and/or one or more hydrocarbyl groups and one or more α-olefins (monomers A) with a maximum of four carbon atoms per molecule, is contacted at a temperature of above 100°C and at elevated pressure with a catalyst containing a Group VIII metal and a phosphorus bidentate ligand of the general formula R¹R²P-R-PR³R⁴ in which R¹ to R⁴ are identical or different optionally polarly substituted hydrocarbyl groups and R is a divalent bridging group containing at least two carbon atoms in the bridge.

2. Process according to claim 1, characterized in that the monomer mixture contains only one monomer D and only one monomer A.

3. Process according to claim 1 or 2, characterized in that the monomer mixture contains 5-norbornene or dicyclopentadiene as monomer D and ethylene as monomer A.

4. Process according to any of claims 1-3, characterized in that the bidentate ligand has the general formula (R¹)₂P-R-P(R¹)₂, in which R¹ represents a phenyl group containing one or more alkoxy groups such as methoxy groups of which at least one is in the ortho position relative to the phosphorus atoms to which the phenyl group is attached and the bridging group R contains three atoms in the bridge, of which at least two are carbon atoms.

5. Process according to claim 4, characterized in that 1,3-bis[bis(2-methoxyphenyl)phosphino]propane is used as the bidentate ligand.

6. Process according to any of claims 1-5, characterized in that the catalyst contains palladium as Group VIII metal incorporated in the catalyst in the form of a salt of a carboxylic acid such as an acetate.

7. Process according to any of claims 1-6, characterized in that the catalyst contains an anion of an acid with a pKa of less than 6.

8. Process according to claim 7, characterized in that the catalyst contains an anion of an acid with a pKa of less than 4.

9. Process according to any of claims 1-8, characterized in that the catalyst contains the bidentate ligand in a quantity of 0.75-5 mol per mol Group VIII metal and the anion of an acid with a pKa of less than 6 in a quantity of 2-100 mol per mol Group VIII metal.

10. Process according to any of claims 1-9, characterized in that the polymerization is carried out by contacting the monomers with a solution of the catalyst in a lower alcohol such as methanol.

11. Process according to any of claims 1-10, characterized in that the polymerization is carried out at a temperature of between 110 and 150°C, a pressure of between 10 and 100 bar and a molar ratio of the olefinically unsaturated compounds relative to carbon monoxide of 5:1 - 1:5, and that per mol of olefinically unsaturated compound to be polymerized a quantity of catalyst is used which contains 10⁻⁶ - 10⁻⁴ mol Group VIII metal.

12. Novel linear block polymers of carbon monoxide with one or more compounds (monomers D) containing in their molecules a cyclohexane ring of which the carbon atoms 1 and 4 are joined to each other by one oxygen or carbon atom, the carbon atoms 5 and 6 are joined to each other by an olefinic double bond and the carbon atoms 2 and 3 carry one or more hydrogen atioms and/or one or more hydrocarbyl groups and one or more α-olefins (monomers A) with a maximum of four carbon atoms per molecule, which block polymers consist of a polymer block in which on the one hand units originating from carbon monoxide and on the other hand units originating from the monomers D are present in alternating order, and a polymer block in which on the one hand units originating from carbon monoxide and on the other hand units originating from the monomers A are present in alternating order.

13. Novel polymer mixtures, characterized in that they contain linear block polymers according to claim 12 and also linear polymers of carbon monoxide with one or more monomers D which polymers contain on the one hand units originating from carbon monoxide and on the other hand units originating from the monomers D in alternating order and optionally linear polymers of carbon monoxide with one or more monomers A in which on the one hand units from carbon monoxide and on the other hand units of the monomers A are present in alternating order.

## Patentansprüche

1. Verfahren zur Herstellung von Polymerisaten und Polymerisatmischungen aus Kohlenmonoxid mit einer oder mehreren olefinisch ungesättigten Verbindungen, dadurch gekennzeichnet, daß man eine Mischung aus Kohlenmonoxid und einer oder mehreren Verbindungen (Monomere D), die in ihren Molekülen einen Cyclohexanring enthalten, dessen Kohlenstoffatome 1 und 4 über ein Sauerstoff- oder Kohlenstoffatom miteinander verbunden sind, dessen Kohlenstoffatome 5 und 6 über eine olefinische Doppelbindung miteinander verbunden sind und dessen Kohlenstoffatome 2 und 3 ein oder mehrere Wasserstoffatome und/oder einen oder mehrere Kohlenwasserstoffreste tragen, und einem oder mehreren α-Olefinen (Monomere A) mit bis zu 4 Kohlenstoffatomen pro Molekül bei einer Temperatur über 100°C und bei erhöhtem Druck mit einem Katalysator, der ein Metall der Gruppe VIII und einen zweizähnigen Phosphorliganden der allgemeinen Formel R¹R²P-R-PR³R⁴, worin R¹ bis R⁴ gleiche oder verschiedene, gegebenenfalls polar substituierte Kohlenwasserstoffreste bedeuten und R eine zweiwertige Brückengruppe mit mindestens zwei Kohlenstoffatomen in der Brücke darstellt, enthält, in Berührung bringt.

2. Verfahren nach Anspruch 1, dadurch gekennzeichnet, daß die Monomermischung nur ein Monomer D und nur ein Monomer A enthält.

3. Verfahren nach Anspruch 1 oder 2, dadurch gekennzeichnet, daß die Monomermischung als Monomer D 5-Norbornen oder Dicyclopentadien und als Monomer A Ethylen enthält.

4. Verfahren nach einem der Ansprüche 1-3, dadurch gekennzeichnet, daß der zweizähnige Ligand die allgemeine Formel (R¹)₂P-R-P(R¹)₂ besitzt, worin R¹ für eine Phenylgruppe steht, die eine oder mehrere Alkoxygruppen, wie Methoxygruppen, enthält, von denen mindestens eine in ortho-Position zum Phosphoratom steht, an das die Phenylgruppe gebunden ist, und die Brückengruppe R drei Atome in der Brücke enthält, von denen mindestens zwei Kohlenstoffatome sind.

5. Verfahren nach Anspruch 4, dadurch gekennzeichnet, daß man als zweizähnigen Liganden 1,3-Bis[bis(2-methoxyphenyl)phosphino]propan verwendet.

6. Verfahren nach einem der Ansprüche 1-5, dadurch gekennzeichnet, daß der Katalysator als Metall der Gruppe VIII in Form eines Carbonsäuresalzes, wie eines Acetats, eingearbeitetes Palladium enthält.

7. Verfahren nach einem der Ansprüche 1-6, dadurch gekennzeichnet, daß der Katalysator ein Anion einer Säure mit einem pKs-Wert unter 6 enthält.

8. Verfahren nach Anspruch 7, dadurch gekennzeichnet, daß det Katalysator ein Anion einer Säure mit einem pKs-Wert unter 4 enthält.

9. Verfahren nach einem der Ansprüche 1-8, dadurch gekennzeichnet, daß der Katalysator den zweizähnigen Liganden in einer Menge von 0,75-5 mol pro Mol des Metalls der Gruppe VIII und das Anion einer Säure mit einem pKs-Wert unter 6 in einer Menge von 2-100 mol pro Mol des Metalls der Gruppe VIII enthält.

10. Verfahren nach einem der Ansprüche 1-9, dadurch gekennzeichnet, daß man die Polymerisation durch Inberührungbringen der Monomere mit einer Lösung des Katalysators in einem niederen Alkohol, wie Methanol, durchführt.

11. Verfahren nach einem der Ansprüche 1-10, dadurch gekennzeichnet, daß man die Polymerisation bei einer Temperatur von 110 bis 150°C, einem Druck von 10 bis 100 bar und einem Molverhältnis der olefinisch ungesättigten Verbindungen zum Kohlenmonoxid von 5:1 - 1:5 durchführt und pro Mol zu polymerisierender olefinisch ungesättigter Verbindung eine 10⁻⁶ - 10⁻⁴ mol des Metalls der Gruppe VIII enthaltende Menge an Katalysator verwendet.

12. Neue lineare Blockpolymerisate aus Kohlenmonoxid mit einer oder mehreren Verbindungen (Monomere D), die in ihren Molekülen einen Cyclohexanring enthalten, dessen Kohlenstoffatome 1 und 4 über ein Sauerstoff- oder Kohlenstoffatom miteinander verbunden sind, dessen Kohlenstoffatome 5 und 6 über eine olefinische Doppelbindung miteinander verbunden sind und dessen Kohlenstoffatome 2 und 3 ein oder mehrere Wasserstoffatome und/oder einen oder mehrere Kohlenwasserstoffreste tragen, und einem oder mehreren α-Olefinen (Monomere A) mit bis zu 4 Kohlenstoffatomen pro Molekül, wobei die Blockpolymerisate aus einem Polymerblock, in dem vom Kohlenmonoxid stammende Einheiten einerseits und von den Monomeren D stammende Einheiten andererseits in alternierender Folge vorliegen, und einem Polymerblock, in dem vom Kohlenmonoxid stammende Einheiten einerseits und von den Monomeren A stammende Einheiten andererseits in alternierender Folge vorliegen, bestehen.

13. Neue Polymermischungen, dadurch gekennzeichnet, daß sie lineare Blockpolymerisate gemäß Anspruch 12 und auch lineare Polymerisate aus Kohlenmonoxid und einem oder mehreren Monomeren D, welche einerseits vom Kohlenmonoxid stammende Einheiten und andererseits von den Monomeren D stammende Einheiten in alternierender Folge und gegebenenfalls lineare Polymerisate aus Kohlenmonoxid und einem oder mehreren Monomeren A, in denen vom Kohlenmonoxid stammende Einheiten einerseits und von den Monomeren A stammende Einheiten andererseits in alternierender Folge vorliegen, enthalten, enthalten.

## Revendications

1. Procédé de préparation de polymères et de mélanges de polymères du monoxyde de carbone et d'un ou plusieurs composés à insaturation oléfinique, caractérisé en ce que l'on met en contact un mélange du monoxyde de carbone et d'un ou plusieurs composés (monomères D) contenant, dans leurs molécules, un noyau cyclohexane dans lequel les atomes de carbone 1 et 4 sont mutuellement unis par un atome d'oxygène ou un atome de carbone, les atomes de carbone 5 et 6 sont mutuellement unis par une double liaison oléfinique et les atomes de carbone 2 et 3 portent un ou plusieurs atomes d'hydrogène et/ou un ou plusieurs radicaux hydrocarbyle et d'une ou plusieurs α-oléfines (monomères A) avec un maximum de 4 atomes de carbone par molécule, à une température supérieure à 100°C et sous une pression élevée, avec un catalyseur contenant un métal du groupe VIII et un ligand bidentate du phosphore de la formule générale R¹R²P-R-PR³R⁴, dans laquelle les symboles R¹ à R⁴ représentent des radicaux hydrocarbyle à substitution polaire éventuelle, identiques ou différents et R représente un radical de pontage bivalent contenant au moins deux atomes de carbone dans le pont.

2. Procédé suivant la revendication 1, caractérisé en ce que le mélange de monomères contient seulement un monomère D et seulement un monomère A.

3. Procédé suivant la revendication 1 ou 2, caractérisé en ce que le mélange de monomères contient du 5-norbornène ou du dicyclopentadiène à titre de monomère D et de l'éthylène à titre de monomère A.

4. Procédé suivant l'une quelconque des revendications 1 à 3, caractérisé en ce que le ligand bidentate répond à la formule générale (R¹)₂P-R-P(R¹)₂, dans laquelle R¹ représente un radical phényle qui contient un ou plusieurs groupes alcoxy, comme des groupes méthoxy dont au moins l'une se trouve en position ortho par rapport à l'atome de phosphore auquel le radical phényle est attaché et le groupe de pontage R contient trois atomes dans le pont dont au moins deux sont des atomes de carbone.

5. Procédé suivant la revendication 4, caractérisé en ce que l'on utilise le 1,3-bis[bis(2-méthoxyphényl)-phosphino]propane à titre de ligand bidentate.

6. Procédé suivant l'une quelconque des revendications 1 à 5, caractérisé en ce que le catalyseur contient du palladium à titre de métal du groupe VIII incorporé au catalyseur sous la forme d'une sel d'un acide carboxylique, tel qu'un acétate.

7. Procédé suivant l'une quelconque des revendications 1 à 6, caractérisé en ce que le catalyseur contient un anion d'un acide qui possède un pKa inférieur à 6.

8. Procédé suivant la revendication 7, caractérisé en ce que le catalyseur contient un anion d'un acide qui possède un pKa inférieur à 4.

9. Procédé suivant l'une quelconque des revendications 1 à 8, caractérisé en ce que le catalyseur contient le ligand bidentate en une quantité de 0,75 à 5 moles par mole de métal du groupe VIII et l'anion d'un acide qui possède un pKa inférieur à 6 en une quantité de 2 à 100 moles par mole de métal du groupe VIII.

10. Procédé suivant l'une quelconque des revendications 1 à 9, caractérisé en ce que l'on entreprend la polymérisation par la mise en contact des monomères avec une solution du catalyseur dans un alcool inférieur, tel que le méthanol.

11. Procédé suivant l'une quelconque des revendications 1 à 10, caractérisé en ce que l'on entreprend la polymérisation à une température comprise entre 110 et 150°C, sous une pression comprise entre 10 et 100 bars et avec un rapport molaire des composés à insaturation oléfinique au monoxyde de carbone de 5:1 à 1:5 et en ce que, par mole de composé à insaturation oléfinique à polymériser, on utilise une proportion de catalyseur qui contient 10⁻⁶-10⁻⁴ mole de métal du groupe VIII.

12. Nouveaux polymères séquencés linéaires du monoxyde de carbone et d'un ou plusieurs composés (monomères D) contenant, dans leurs molécules, un noyau cyclohexane dont les atomes de carbone 1 et 4 sont unis l'un à l'autre par l'intermédiaire d'un atome d'oxygène ou de carbone, les atomes de carbone 5 et 6 sont unis l'un à l'autre par l'intermédiaire d'une double liaison oléfinique et les atomes de carbone 2 et 3 portent un ou plusieurs atomes d'hydrogène et un ou plusieurs radicaux hydrocarbyle et d'une ou plusieurs α-oléfines (monomères A) avec un maximum de quatre atomes de carbone par molécule, lesquels polymères séquencés sont constitués d'une séquence polymérique dans laquelle, d'une part, les unités provenant du monoxyde de carbone et, d'autre part, les unités provenant des monomères D sont présentes dans un ordre alternant et d'une séquence polymérique dans laquelle, d'une part, les unités provenant du monoxyde de carbone et, d'autre part, les unités provenant des monomères A sont présentes en un ordre alternant.

13. Nouveaux mélanges de polymères, caractérisé en ce qu'ils contiennent des polymères séquencés linéaires selon la revendication 12 et également des polymères linéaires du monoxyde de carbone et d'un ou plusieurs monomères D, lesquels polymères contiennent, d'une part, des unités provenant du monoxyde de carbone et, d'autre part, des unités provenant des monomères D en un ordre alternant et éventuellement des polymères linéaires du monoxyde de carbone et d'un ou plusieurs monomères A, dans lesquels, d'une part, les unités provenant du monoxyde de carbone et, d'autre part, les unités provenant des monomères A, sont présentes dans un ordre alternant.
